# EUROPÄISCHE PATENTANMELDUNG

(11) **EP 4 231 106 A1**
(43) Veröffentlichungstag der Anmeldung: **23.08.2023**
(21) Anmeldenummer: 22157816.4
(22) Anmeldetag: 21.02.2022
(51) Int. Cl.: G05B 19/418, G05B 23/02

(54) **VERFAHREN ZUM ÜBERWACHEN VON SPANENDEN BEARBEITUNGSPROZESSEN IN DER WERKSTÜCKBEARBEITUNG**

(71) Anmelder: pro-micron GmbH, 87600 Kaufbeuren (DE)
(72) Erfinder: Wunderlich, Rainer, 87600 Kaufbeuren (DE)
(74) Vertreter: Raffay & Fleck

(57) **Zusammenfassung**

Ein Verfahren zum Überwachen von spanenden Bearbeitungsprozessen in der Werkstückbearbeitung, umfasst folgende Schritte:
a. Ein wird Bearbeitungsprozess anhand einer vorgegebenen, in dem Bearbeitungsprozess zu erreichenden Endform eines Werkstücks sowie von zu erhaltenden Gütemerkmalen der Endform des Werkstücks geplant.
b. Der geplante Bearbeitungsprozess wird in einer computergestützt durchgeführten Simulation (1, I) simuliert.
c. Im Rahmen der computergestützten Simulation (I) während des simulierten Bearbeitungsprozesses auftretende Soll-Werte von Kenngrößen des simulierten Bearbeitungsprozesses werden erfasst und gespeichert.
d. Während des nach dem geplanten und simulierten Bearbeitungsprozesses durchgeführten realen Bearbeitungsprozesses (III) die in der Simulation (I) betrachteten Kenngrößen werden überwacht und deren Ist-Werte werden erfasst.
e. Durch Abgleich (3) der während des realen Bearbeitungsprozesses erfassten Ist-Werte der Kenngrößen mit den während der Simulation (I) erfassten SollWerten dieser Kenngrößen wird die Qualität des Bearbeitungsprozesses und/oder des bearbeiteten Werkstücks beurteilt.

## Beschreibung

Die Erfindung betrifft ein Verfahren zum Überwachen von spanenden Bearbeitungsprozessen in der Werkstückbearbeitung.

Die spanende Bearbeitung stellt auch weiterhin eine der bedeutendsten, wenn nicht gar die bedeutendste fertigungstechnische Bearbeitungsform dar. So werden weiterhin eine große Vielzahl von Werkstücken aus den unterschiedlichsten Materialen, wie etwa Metall, Kunststoff oder auch Kompositmaterial, durch Fräsen oder Drehen hergestellt, häufig auch durch Schleifen endbearbeitet. Dies gilt gleichermaßen für Werkstücke geringer Baugröße wie etwa Zahnräder von Getrieben, wie auch für Werkstücke von erheblicher Baugröße wie z.B. Turbinenschaufeln oder dergleichen. Die spanende Bearbeitung kommt dabei sowohl in der Serienfertigung als auch bei der Bearbeitung von Werkstücken in Kleinserien oder auch in der Einzelteilfertigung zum Einsatz. Dabei ist die Qualitätsüberwachung und -sicherung ein besonderer Aspekt, der zunehmend an Bedeutung gewonnen hat und weiter gewinnt.

Bei der Planung eines auf einer Werkzeugmaschine, wie insbesondere einer Fräs-, Dreh- oder Schleifmaschine, durchzuführenden spanenden Bearbeitungsprozesses wird für die Ablaufplanung und -programmierung der Werkzeugmaschine in der Regel eine Planungssoftware eingesetzt. Dabei werden Konstruktionsdaten, häufig aus den Konstruktionsprogrammen exportierte Dateien, in eine solche Planungssoftware eingelesen, in der dann der Bearbeitungsprozess geplant werden kann. Hierbei werden insbesondere Werkzeugbahnen auf der Werkstückoberfläche geplant, um einerseits einen Bearbeitungsverlauf zu finden, der sicher möglich Werkzeugkollisionen mit dem Werkstück ausschließt, der aber auch eine sichere und zuverlässige Bearbeitung des Werkstücks in einer möglichst rationalisierten Bearbeitungszeit erlaubt. Dabei kann z.B. Wert gelegt werden auf gleichmäßig Schnittverläufe, die eine hohe Oberflächengüte des bearbeiteten Werkstücks erzeugen, oder auch auf eng gelegt, Schnittbahnen an besonders kritischen Werkstückabschnitten, um dort eine Festigkeit und Werkstückstabilität zu erhalten.

Um nun einen im Rahmen einer solchen Planung erhaltenen Bearbeitungsablauf einerseits in der Praxis zu verifizieren im Hinblick auf eine Qualität des erhaltenen Bearbeitungsergebnisses und um andererseits eine Grundlage für die Überwachung des Bearbeitungsprozesses zu erhalten, werden nun in der Praxis Referenzstücke auf den Werkzeugmaschinen anhand des geplanten Bearbeitungsablaufes bearbeitet, und es wird die Qualität der Referenzstücke beurteilt und es werden zu Kenngrößen des Bearbeitungsprozesses, wie z.B. der Stromaufnahme der Spindelmotors einer Werkzeugspindel, bei der Bearbeitung des Referenzstücks die Werte erfasst und gespeichert. Diese Werte werden dann in folgenden realen Bearbeitungsprozessen, in denen das eigentliche Werkstück bearbeitet wird, als Referenzwerte hergenommen und mit den während des realen Bearbeitungsprozesses erfassten Werten der Kenngrößen abgeglichen. Stimmen die Werte im Rahmen eines zuvor festgelegten Toleranzbereichs überein, so wird auf einen den Soll-Vorgaben entsprechend verlaufenen Bearbeitungsprozess und ein qualitativ gutes Ergebnis des bearbeiteten Werkstücks geschlossen.

Dieses Vorgehen ist allerdings umständlich, da es zunächst das Bearbeiten eines Referenzstücks erfordert und ein Aufzeichnen der dabei erfassten Werte der Kenngrößen als Soll-Werte. Das Erstellen eines Referenzstücks ist zudem insbesondere dann ein kostentreibender Faktor, wenn anschließend nur eine Kleinserie von Werkstücken bearbeitet werden soll oder sogar nur ein einziges Werkstück im Rahmen einer Einzelteilfertigung bearbeitet werden soll.

Hier setzt nun die Erfindung an, der die Auflage zugrunde liegt, eine Möglichkeit zu schaffen, Bearbeitungsprozesse in der spanenden Werkstückbearbeitung zu überwachen, ohne hierbei auf die Bearbeitung eines Referenzstücks zurückgreifen zu müssen.

Diese Aufgabe wird erfindungsgemäß gelöst durch ein Verfahren mit den Merkmalen des Anspruchs 1. Vorteilhafte Weiterbildungen der Erfindung sind in den Ansprüchen 2 bis 7 bezeichnet.

Gemäß der Erfindung umfasst ein Verfahren zum Überwachen von spanenden Bearbeitungsprozessen in der Werkstückbearbeitung folgende Schritte:
a. Ein Bearbeitungsprozess wird anhand einer vorgegebenen, in dem Bearbeitungsprozess zu erreichenden Endform eines Werkstücks sowie von zu erhaltenden Gütemerkmalen der Endform des Werkstücks geplant.
b. Der geplante Bearbeitungsprozess wird in einer computergestützt durchgeführten Simulation simuliert. Dies erfolgt typischerweise mit einem Simulationsprogramm, das insbesondere auch die Art und Bauform sowie die relevanten Betriebsparamater der Werkzeugmaschine und die Art und Bauform des verwendeten Bearbeitungswerkzeuges mit einbezieht.
c. Es werden im Rahmen der computergestützt durchgeführten Simulation während des simulierten Bearbeitungsprozesses auftretende Soll-Werte von Kenngrößen des simulierten Bearbeitungsprozesses erfasst und gespeichert. Dabei können insbesondere an der realen Werkzeugmaschine eingesetzte Sensoren und Messaufnehmer in einer verwendeten Simulationssoftware mit abgebildet sein, so dass mit den dort virtuell vorhandenen Sensoren und Messaufnehmern während der Simulation die Werte der Kenngrößen erfasst werden können.
d. Es werden während des nach dem geplanten und simulierten Bearbeitungsprozesses durchgeführten realen Bearbeitungsprozesses die in der Simulation betrachteten Kenngrößen überwacht und deren Ist-Werte werden erfasst. Hierbei wird dann typischerweise auf die realen Sensoren und Messaufnehmer zurückgegriffen werden, die in der Simulationssoftware für die virtuelle Werkzeugmaschine gleichermaßen gespiegelt umgesetzt sind.
e. Schließlich wird durch Abgleich der während des realen Bearbeitungsprozesses erfassten Ist-Werte der Kenngrößen mit den während der Simulation erfassten Soll-Werten dieser Kenngrößen die Qualität des Bearbeitungsprozesses und/oder des bearbeiteten Werkstücks beurteilt.

Mit einer solchen Vorgehensweise ist es möglich, die Überwachung und auch die Überprüfung des Bearbeitungsprozesses im Hinblick auf die Qualität eines Bearbeitungsergebnisses vollständig ohne das Erfordernis des Erstellens eines Referenzstücks durchzuführen. Es wird stattdessen allein auf virtuell erhaltene Simulationsdaten zurückgegriffen. Hierfür ist es dann allein erforderlich, in einer Simulation den in dem vorherigen Schritt geplanten Prozess entsprechend der Planung auf einer in der Simulation der realen Werkzeugmaschine nachgebildeten virtuellen Werkzeugmaschine mit einem entsprechend dem realen Werkzeug nachgebildeten virtuellen Werkzeug virtuell durchzuführen und dabei mit entsprechend der real an der Werkzeugmaschine vorhandenen Sensorik und Messaufnehmern nachgebildeten virtueller Sensorik und virtuellen Messaufnehmern die bei der simulierten spanenden Bearbeitung des virtuellen Werkstücks erfassten Werte vorgegebener Kenngrößen als Soll-Werte zu erfassen, um diese dann in einem anschließend mit dem entsprechend der Planung durchgeführten realen Bearbeitungsprozess mit der realen Sensorik und den realen Messaufnehmern erfassten Ist-Werten abzugleichen und anhand des Abgleichs eine Bewertung des Prozessergebnisses vorzunehmen.

Die vorstehend genannte Simulation hat zudem den Vorteil, dass im Zuge einer solchen Simulation eine Überprüfung des geplanten Bearbeitungsprozesses auf eine Ergebnisqualität vorgenommen werden kann. Denn wenn die im Rahmen der Simulation erfassten Soll-Werte erkennen lassen, dass diese zu einem schlechten Ergebnis des Werkstücks führen, z.B. weil Schwingungen von Werten erfasst werden, die auf Probleme bei einem Werkzeugeingriff hindeuten, kann die Planung des Bearbeitungsprozesses noch einmal überarbeitet werden und kann mit dem neuerlich geplanten Bearbeitungsprozess erneut in die Simulation eingestiegen werden, um dann neue Soll-Werte zu ermitteln.

Im Rahmen dieser Bewertung kann insoweit insbesondere bei einer im Rahmen eines Toleranzbereichs liegenden Übereinstimmung der während des realen Bearbeitungsprozesses ermittelten Ist-Werte der Kenngrößen mit den während der Simulation ermittelten Soll-Werten der Kenngrößen eine Übereinstimmung des bearbeiteten Werkstücks mit den Qualitätsvorgaben festgestellt werden. Eine Inaugenscheinnahme des fertig bearbeiteten Werkstücks kann dabei sogar entfallen.

Als Kenngrößen des Bearbeitungsprozesses können insbesondere an einem während des Bearbeitungsprozesses an dem Werkstück angreifenden Bearbeitungswerkzeug auftretende Kräfte und/oder Biegemomente genutzt werden, wie sie bei Zerspanungsprozessen z.B. mit einem sensorischen Werkzeughalter gemessen werden können, z.B. mit einem solchen, den die Anmelderin unter der Marke SPIKE^{®} anbietet.

Alternativ oder auch zusätzlich können auch Drehmomente und/oder Stromaufnahmen von Achs- oder Spindelmotoren einer den zerspanenden Bearbeitungsprozess ausführenden Werkzeugmaschine als Kenngrößen betrachtet werden.

Als Kenngrößen können auch an dem Bearbeitungswerkzeug angreifende Beschleunigungen und/oder Vibrationen und/oder erzeugter Körperschall Verwendung finden.

Als besonders geeignet, da in der Aussage sehr genau, haben sich die an dem Bearbeitungswerkzeug in der Zerspanung während der Bearbeitung angreifenden Biegemomente herausgestellt, wobei auch andere, z.B. die vorstehend genannten, Kenngrößen verwendet werden können.

Mit Vorteil kann die Erfassung der Soll-Werte der Kenngrößen in der Simulation (Schritt c) und die Erfassung der Ist-Werte der Kenngrößen während des realen Bearbeitungsprozesses (Schritt d) nach Ort und/oder Zeit aufgelöst erfolgen. Dies erlaubt dann eine genaue Zuordnung einer Abweichung der Ist-Werte von den Soll-Werten und eines daraus resultierenden von der Vorgabe abweichenden Bearbeitungsablaufs zu einer Position auf dem Werkstück und/oder zu einem Zeitpunkt der Bearbeitung. Bei einer räumlich und/oder aufgelösten Erfassung der Soll- und der Ist-Werte kann z.B. eine auf einer Anzeigeeinrichtung, z.B. einem Computerbildschirm eine sich mit der Bearbeitungszeit entwickelnde Darstellung des Werkstücks in seiner Endform angezeigt werden, in der in Falschfarben z.B. die eine Abweichung der Ist- von den Soll-Werten aufgezeigt wird. Eine solche Darstellung erlaubt einem Maschinenführer eine sehr schnelle und einfache visuelle Kontrolle des laufenden Prozesses. Hierzu, jedoch nicht allein zu diesem Zweck, kann mit Vorteil der Abgleich in Schritt e computergestützt und in Echtzeit erfolgen, so dass die Überwachung in Echtzeit möglich ist. Es kann aber auch ein Abgleich der Ist- mit den Soll-Werten nachgelagert nach dem Bearbeitungsprozess erfolgen, um so die Qualität des Arbeitsergebnisses nachgelagert zu beurteilen.

Das erfindungsgemäße Verfahren kann auch vorsehen, dass bei einer fest-gestellten, eine Toleranzschwelle überschreitenden Abweichung der Ist-Werte wenigstens einer der Kenngrößen von den Soll-Werten der wenigstens einen Kenngröße der Bearbeitungsprozess angehalten oder abgebrochen wird. Auf diese Weise kann ein bearbeitetes Werkstück ggf. nach einer Anpassung der Hardware oder der Maschinensteuerung der Werkzeugmaschine, z.B. nach dem Austausch eines verschlissenen Werkzeugs, noch weiterbearbeitet werden, ohne dass das Werkstück als Ausschuss zu betrachten ist. Sofern das gerade bearbeitete Werkstück nicht mehr weiter bearbeitete werden kann, ist ein Anhalten oder Abbrechen des Bearbeitungsprozesses jedenfalls dahingehend vorteilhaft, als dass keine weitere Bearbeitung erfolgt, die Zeit und Ressourcen vergeudet und mithin Kosten verursacht. Das Anhalten oder Abbrechen kann unmittelbar mit Feststellen einer die Toleranzschwelle überschreitenden Abweichung erfolgen. Es kann aber auch vorgesehen sein, dass zunächst noch ein aktuell ausgeführter Teilbearbeitungsschritt zu Ende geführt und der Prozess erst dann angehalten oder abgebrochen wird. So kann z.B. ein Werkzeug geschont werden, welches ansonsten bei einem abrupten Abbruch Schaden nehmen könnte. _Auch kann so verhindert werden, dass ein Werkstück durch einen abrupten Abbruch solche Bearbeitungsspuren aufweist, die es nicht weiter verwendbar machen.

Die vorstehend bezeichnete Toleranzschwelle kann insbesondere durch einen vorbestimmten Extremwert für den ganzen Bearbeitungsprozess bestimmt sein. Sie kann aber auch alternativ oder ergänzend positions- und/oder zeitabhängig für beliebig viele Werte, auch mit abweichenden Größen, definiert werden.

Mit Vorteil können zudem die in Schritt d während des realen Bearbeitungsprozesses erfassten Ist-Werte der Kenngrößen gemeinsam mit den in Schritt c während der Simulation erfassten Soll-Werte der Kenngrößen in einem dem in dem realen Bearbeitungsprozess bearbeiteten Werkstück zugeordneten Bearbeitungsprotokoll gespeichert werden. Auf diese Weise wird ein dem Werkstück zugeordnetes Qualitätsdokument erhalten. Solch eine Dokumentation wird in verschiedenen Bereichen von den Abnehmern der Werkstücke verlangt, um z.B. bei etwaig auftretenden Fehlern und Defekten der Werkstücke anhand solcher -Dokumentation beurteilen zu können, ob es in der Fertigung zu Fehler gekommen sein könnte.

Im Nachfolgenden wird ein Vorgehen nach dem erfindungsgemäßen Verfahren noch einmal im Rahmen einer anhand der beigefügten Figuren dargestellten möglichen Ausführungsform erläutert. Hierbei zeigen
- Figur 1: schematisch einen Ablauf des Verfahrens mit der Simulation, dem Aufnehmen der Kenngrößen während der Simulation, einer Festlegung eines Toleranzbereichs und der anschließenden Messung der Kenngrößen im realen Prozess mit zugehöriger Auswertung im Vergleich mit den in der Simulation erfassten Kenngrößen; und
- Figur 2: in den Darstellungen a bis c Veranschaulichungen von Beispielen einer von der Vorgabe abweichenden realen Verläufen einer Kenngröße als Indikator für einen nicht den Vorgaben entsprechenden Prozessverlauf.

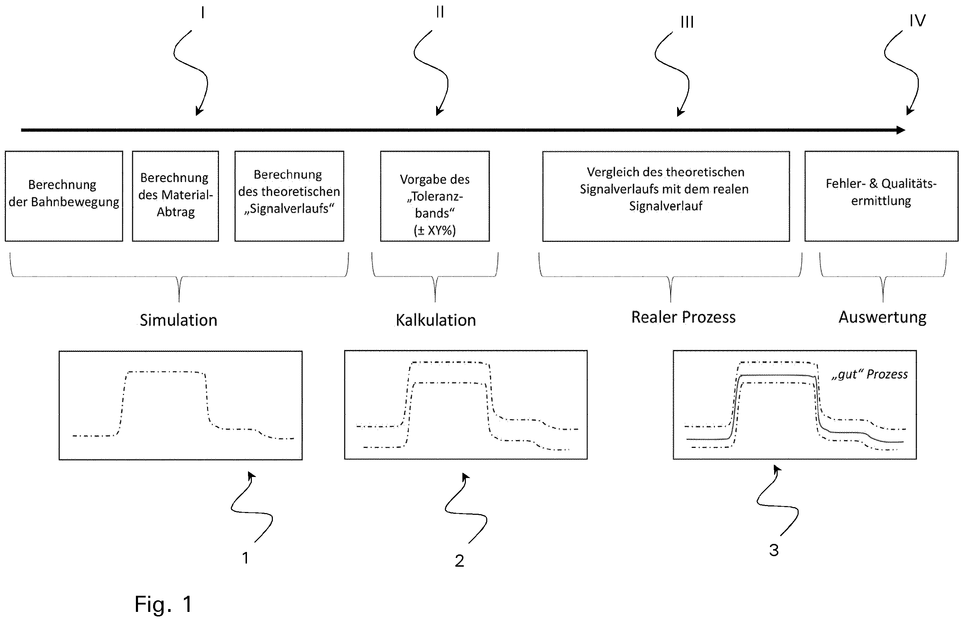

In Figur 1 ist schematisch ein Ablauf für ein erfindungsgemäßes Verfahren zum Überwachen von spanenden Bearbeitungsprozessen in der Werkstückbearbeitung anhand einer möglichen Ausführungsvariante exemplarisch dargestellt. Ein oben in der Figur liegender, durchgezogene Pfeil symbolisiert dabei einen Zeitstrahl und gibt zu erkennen, dass die mit I bis IV bezifferten, nachstehend näher beschriebenen Schritte in einer nachfolgend näher erläuterten Weise zeitlich aufeinanderfolgend liegen.

Ein Bearbeitungsprozess, der zuvor anhand einer vorgegebenen, in dem Bearbeitungsprozess zu erreichenden Endform eines Werkstücks sowie von zu erhaltenen Gütemerkmalen der Endform des Werkstücks geplant worden ist, wird in dem mit I bezeichneten Abschnitt computergestützt simuliert. Hierbei werden Bahnbewegungen berechnet, die ein Werkzeug relativ zu dem Werkstück vollzieht, in der Praxis erhalten durch eine Bewegung des Werkstücks und/oder des Werkzeugs. Weiterhin wird bei der Simulation der Materialabtrag berechnet, der ausgehend von einer Rohform des Werkstücks bei den jeweils durchlaufenden Bahnen nach Ort und Zeit aufgelöst erfolgt. Aus den so rechnerisch erhaltenen Daten können dann anhand von Bewegungskoordinaten des Werkzeugs relativ zum Werkstück sowie der Stärke des jeweils im Verlaufe der Bahn abzutragenden Materials unter Berücksichtigung der Materialeigenschaften Werteverläufe von vorgebbaren Kenngrößen als Soll-Werte ermittelt werden, die dann als theoretische Signalverläufe von Sensoren, die die Werte der Kenngrößen erfassen, erkannt werden können. Dies kann zum Beispiel ein Signalverlauf für ein an dem Werkzeug oder einem Werkzeughalter angreifendes Biegemoment sein. Es sind aber auch andere Kenngrößen denkbar, wie an dem Werkzeug anliegende Kräfte oder Momente oder auch Drehmoment oder Stromaufnahmen von Spindelmotoren für Werkzeug- und/oder Werkstückantriebe oder dergleichen, deren Signalverläufe simuliert werden.

In der Figur 1 ist beispielhaft ein Verlauf des simulierten Wertes einer Kenngröße, aufgetragen über z.B. der Zeit, in einer gestrichelten Linie in dem mit dem Bezugszeichen 1 versehenen Fenster dargestellt. Anstelle eines Auftrages über die Zeit kann hier z.B. auch ein Auftrag über den Ort vorgesehen sein. Ebenso denkbar ist eine Auflösung der Daten nach Ort und Zeit gleichermaßen.

In einem nachstehenden Schritt, in der Figur 1 mit II bezeichnet, wird hier im Rahmen einer Kalkulation ein Toleranzband festgelegt, in diesem Ausführungsbeispiel über eine prozentuale Abweichung um ±XY%, wobei XY für einen für den Prozess passenden Wert steht, den der Fachmann anhand seiner Erfahrung, ggf. unter Rückgriff auf einfache Versuche festlegen wird. Entsprechend sind in der Darstellung in dem mit dem Bezugszeichen 2 versehenen Fenster zwei gestrichelte Linien zu erkennen, von denen eine untere den Verlauf eines unteren Grenzwertes des Toleranzfensters aufzeigt, eine obere den Verlauf eines oberen Wertes des Toleranzfensters. Diese Simulation und Kalkulation kann insbesondere einmalig festgelegt werden auch für die Durchführung einer großen Zahl von durchzuführenden Bearbeitungsprozessen, zum Beispiel in einer Serienfertigung. Diese Schritte können aber auch vollzogen werden für einen lediglich einmalig nachfolgenden individuellen Bearbeitungsprozess.

Weiterhin in der Figur 1 dargestellt ist nun der bereits erwähnte Bearbeitungsprozess, der hier als realer Prozess bezeichnet ist und in dem mit III bezeichneten Abschnitt erfolgt. Im Rahmen dieses Prozesses wird der Verlauf desjenigen Kennwertes, der in der Simulation zuvor als simulierter Kennwert für den Abgleich ermittelt worden ist als Ist-Wert erfasst.

Im Rahmen einer Auswertung, die in dem in der Figur 1 gezeigten Ablauf bei IV veranschaulicht ist, wird der mittels Sensorik im realen Bearbeitungsprozess erfasste Verlauf des Ist-Wertes der Kenngröße mit dem durch Vorgabe des Toleranzbandes bestimmten möglichen Verlauf des Soll-Wertes abgeglichen. Diese Auswertung kann entweder dem Prozess der Bearbeitung nachgelagert also zeitlich entkoppelt, erfolgen. Sie kann aber auch in situ also während der Durchführung des Bearbeitungsprozesses vorgenommen werden. In der Figur 1 ist in dem mit 3 bezeichneten Fenster ein Ergebnis gezeigt, bei dem der in durchgezogener Linie dargestellte, mittels der geeigneten Sensorik ermittelte Ist-Wert-Verlauf der Kenngröße innerhalb des durch die beiden gestrichelten Linien gezeigten, zuvor in dem unter II beschriebenen Schritt bestimmten Toleranzband liegt, sodass der durchgeführte reale Prozess als "gut" und den Erwartungen bzw. Vorgaben entsprechend bewertet wird. Die wie in dem Fenster 3 gezeigten Daten bzw. Verläufe können dabei insbesondere gespeichert und dem bearbeiteten Werkstück als Bearbeitungsprotokoll zugeordnet und beigegeben werden.

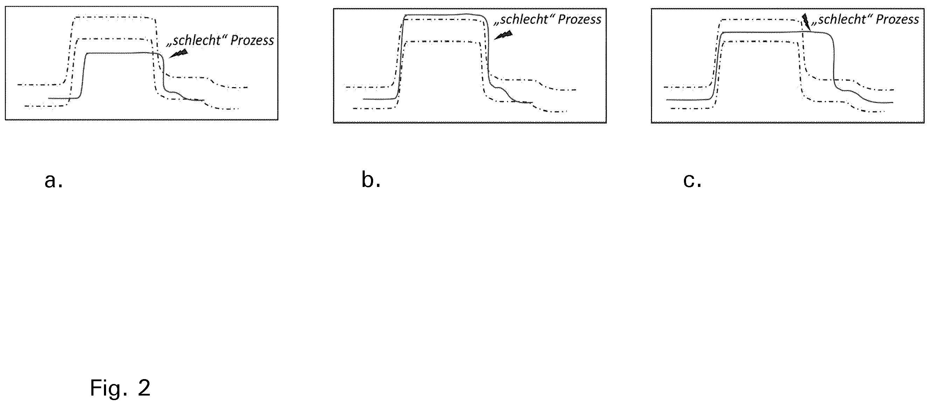

In der Figur 2 sind in drei unterschiedlichen Darstellungen a, b und c sensorisch ermittelte Verläufe des Ist-Wertes (jeweils in durchgezogener Linie) im Verhältnis zu dem zuvor unter dem Schritt II ermittelten Toleranzband (die beiden gestrichelten Linienverläufe) gezeigt, bei denen sich der Ist-Wert-Verlauf der Kenngröße zumindest teilweise außerhalb der Vorgabe des Toleranzbandes bewegt, sodass der jeweils durchgeführte Prozess als nicht den Vorgaben entsprechend und demnach als "schlecht" bewertet wird. Kommt es zu einer solchen Feststellung im Rahmen der Auswertung, kann der laufende Prozess insbesondere angehalten werden, um eine Ursache für die Abweichung von den durch die Simulation vorgegebenen Werten festzustellen und den Prozess bzw. die Bearbeitungsmaschine nachzujustieren, um erneut eine den Vorgaben entsprechende und im Ergebnis der Auswertung wie in Figur 1 in dem mit 3 bezeichneten Fenster erkannte Auswertung zu erhalten und darüber eine qualitativ den Vorgaben entsprechende Bearbeitung des Werkstücks im spanenden Prozess zu erhalten.

Aus der vorstehenden Beschreibung ist noch einmal verdeutlicht, dass mit dem erfindungsgemäßen Verfahren eine Überwachung eines spanenden Bearbeitungsprozesses vorgenommen werden kann, die auf eine Analyse des fertigen Werkstücks zum Beispiel im Rahmen einer aufwändigen Vermessung, verzichten kann, indem sie lediglich einen Abgleich von Simulationsdaten für die bestimmte Kenngröße in Form von Soll-Werten mit den während der realen Bearbeitung für diese Kenngrößen ermittelten Ist-Werten vollzieht und bei einer Übereinstimmung im Rahmen eines Toleranzbereiches die eingehaltene Qualität der Bearbeitung erkennt und bestätigt, bei einer Abweichung hingegen einen Fehler und möglichen Qualitätsmangel erkennt.

Die vorstehende Beschreibung des gezeigten Ausführungsbeispiels dient noch einmal der Veranschaulichung und Verdeutlichung der Erfindung und ihrer Vorteile, ohne dass in dem gezeigten Ausführungsbeispiel sämtliche möglichen Ausgestaltungen der Erfindung, wie sie in den nachstehenden Patentansprüchen definiert ist, etwa abgebildet werden.

## Patentansprüche

1. Verfahren zum Überwachen von spanenden Bearbeitungsprozessen in der Werkstückbearbeitung, wobei
a. ein Bearbeitungsprozess anhand einer vorgegebenen, in dem Bearbeitungsprozess zu erreichenden Endform eines Werkstücks sowie von zu erhaltenden Gütemerkmalen der Endform des Werkstücks geplant wird,
b. der geplante Bearbeitungsprozess in einer computergestützt durchgeführten Simulation (I) simuliert wird,
c. im Rahmen der computergestützten Simulation (I) während des simulierten Bearbeitungsprozesses auftretende Soll-Werte von Kenngrößen des simulierten Bearbeitungsprozesses erfasst und gespeichert werden,
d. während des nach dem geplanten und simulierten Bearbeitungsprozesses durchgeführten realen Bearbeitungsprozesses (III) die in der Simulation (I) betrachteten Kenngrößen überwacht und deren Ist-Werte erfasst werden und
e. durch Abgleich der während des realen Bearbeitungsprozesses erfassten Ist-Werte der Kenngrößen mit den während der Simulation (I) erfassten Soll-Werten dieser Kenngrößen die Qualität des Bearbeitungsprozesses und/oder des bearbeiteten Werkstücks beurteilt wird.

2. Verfahren nach Anspruch 1, **dadurch gekennzeichnet, dass** bei einer im Rahmen eines Toleranzbereichs liegenden Übereinstimmung der während des realen Bearbeitungsprozesses (III) ermittelten Ist-Werte der Kenngrößen mit den während der Simulation (I) ermittelten Soll-Werten der Kenngrößen eine Übereinstimmung des bearbeiteten Werkstücks mit den Qualitätsvorgaben festgestellt wird.

3. Verfahren nach einem der vorhergehenden Ansprüche, **dadurch gekennzeichnet, dass** als Kenngrößen des Bearbeitungsprozesses
• an einem während des Bearbeitungsprozesses an dem Werkstück angreifenden Bearbeitungswerkzeug auftretende Kräfte und/oder Biegemomente und/oder
• Drehmomente und/oder Stromaufnahmen von Achs- oder Spindelmotoren einer den Bearbeitungsprozess ausführenden Werkzeugmaschine und/oder
• Beschleunigungen und/oder Vibrationen und/oder erzeugter Körperschall
betrachtet und deren Soll-Werte in der Simulation (I, Schritt c) und Ist-Werte während des realen Bearbeitungsprozesses (III, Schritt d) erfasst und abgeglichen (Schritt e) werden.

4. Verfahren nach einem der vorhergehenden Ansprüche, **dadurch gekennzeichnet, dass** die Erfassung der Soll-Werte der Kenngrößen in der Simulation (I, Schritt c) und die Erfassung der Ist-Werte der Kenngrößen während des realen Bearbeitungsprozesses (III, Schritt d) nach Ort und/oder Zeit aufgelöst erfolgt.

5. Verfahren nach einem der vorhergehenden Ansprüche, **dadurch gekennzeichnet, dass** der Abgleich in Schritt e computergestützt und in Echtzeit erfolgt.

6. Verfahren nach Anspruch 5, **dadurch gekennzeichnet, dass** bei einer festgestellten, eine Toleranzschwelle überschreitenden Abweichung der Ist-Werte wenigstens einer der Kenngrößen von den Soll-Werten der wenigstens einen Kenngröße der Bearbeitungsprozess, ggf. nach Beendigung eines aktuell ausgeführten Teilbearbeitungsschrittes, angehalten oder abgebrochen wird.

7. Verfahren nach einem der vorhergehenden Ansprüche, **dadurch gekennzeichnet, dass** die in Schritt d während des realen Bearbeitungsprozesses (III) erfassten Ist-Werte der Kenngrößen gemeinsam mit den in Schritt c während der Simulation (I) erfassten Soll-Werte der Kenngrößen in einem dem in dem realen Bearbeitungsprozess (III) bearbeiteten Werkstück zugeordneten Bearbeitungsprotokoll gespeichert werden.
